# EUROPEAN PATENT SPECIFICATION

(11) **EP 2 555 385 B1**
(45) Date of publication and mention of the grant of the patent: **19.06.2019**
(21) Application number: 11176157.3
(22) Date of filing: 01.08.2011
(51) Int. Cl.: H02K 1/27, H02K 15/03

(54) **Permanent magnet assembly with moulded plastic cover and method for protecting a permanent magnet**
Dauermagnetanordnung mit Abdeckung aus Formkunststoff und Verfahren zum Schützen eines Dauermagneten
Ensemble formant aimant permanent doté d'un couvercle moulé en plastique et procédé pour protéger un aimant permanent

(43) Date of publication of application: 06.02.2013
(73) Proprietor: Siemens Gamesa Renewable Energy A/S, 7330 Brande (DK)
(72) Inventor: Urda, Adriana Cristina, 5230 Odense M (DK); Valbjoern, Jesper, 6000 Kolding (DK)
(74) Representative: Aspacher, Karl-Georg

(56) References cited:
- EP-A1- 2 348 619
- WO-A1-02/103882
- WO-A2-03/003538

## Description

The present invention relates to the technical field of electrical machines having a rotor which comprises magnets, in particular permanent magnets. In particular, the present invention relates to a permanent magnet assembly for an electrical machine. Further, the present invention relates to a rotor assembly, to an electrical machine and to a wind turbine, which are all equipped with such a permanent magnet assembly. Furthermore, the present invention relates to a method for protecting at least one permanent magnetic piece which is placed onto a base plate.

Electrical machines or electromechanical transducers are machines, which convert electrical energy into mechanical energy or vice versa. An electric motor is a widely used electrical machine that converts electrical energy into mechanical energy using magnetic field linkage. An electric generator is an electrical machine that converts mechanical energy into electrical energy also using a magnetic field linkage.

An electrical machine comprises a stator and a rotor. The stator is an assembly, which represents the stationary part of an electrical machine. The rotor is an assembly, which represents the moving part of an electrical machine.

In order to realize a magnetic field linkage, magnets, for instance permanent magnets, may be used in particular for a rotor of an electrical machine. In recent years, especially since the introduction of rare-earth magnetic materials, permanent magnet (PM) electrical machines have become popular since they eliminate the need for commutators and brushes, which are commonly used with conventional Direct Current (DC) electrical machine. The absence of an external electrical rotor excitation eliminates losses on the rotor and makes permanent magnet electrical machines more efficient. Further, the brushless design of a PM electrical machine allows conductor coils to be located exclusively in the stationary stator. In this respect it is mentioned that non-PM electrical machines, which are equipped with commutators and brushes, are susceptible to significantly higher maintenance costs.

PM electrical machines are also known for their durability, controllability, and absence of electrical sparking. Thanks to their advantages the PM electrical machines are widely used in many applications such as electric vehicles (electrical machine is a motor) or in power generation systems (electrical machine is a generator) such as for instance a wind turbine.

Strong permanent magnets, like rare-earth magnets, are used to an increasing extent in large electrical machines, especially in motors and generators. This is due to the increased efficiency and robustness compared to electrical excitation. But regarding practical applications some difficulties may occur. The materials, in particular of rare-earth magnets, may be rather brittle and cannot safely be fixed by bolting alone. The magnets may be fixed to a rotor rim for example by, for instance, gluing. Furthermore, it may be a difficult, time consuming and not least a hazardous process to handle the individual magnets and to get the correct position of each magnet as the magnets may be pulled towards other magnets and ferromagnetic objects in the production setup. Thus, the mounting and alignment of the permanent magnets at the rotor assembly are difficult and time consuming. Therefore, there may be a need for facilitating mounting and alignment of permanent magnets to a rotor assembly of an electrical machine.

Furthermore humidity and other aggressive substances and mechanical influences such as shocks and vibrations and meical stress due to heat extension can harm and damage the magnet.

When service, repair and assembly of the rotor are carried out the strong magnetic forces can draw ferromagnetic objects which can hit the magnet and cause damage to the brittle material when hitting it. A foreign object, such as a loose screw, in the narrow airgap of just 6 mm between rotor and stator can cause serious damage to the magnets and the rotor when in operation. Therefore there is need for protection of the magnet against disturbing objects.

There are existing solutions on the market for protecting the magnets. This is done by means of epoxy painting, powder coating, tape bondage or fully enclosed magnet modules.

To provide structural support and ease the fitting of the magnet to a rotor a magnet assembly is proposed, wherein a shape (i.e. a dovetail) is grind into the bedplate which fits into a complementary groove in the rotor yoke (see EP 2 348 619 A1).

The document WO 03/003538 A2 discloses a secondary part for a motor, comprising a support element and several permanent magnets and a cast body made of plastic, whereby the permanent magnets are cast therein.

The document WO 02/103882 A1 describes a permanent magnet element intended for an electric machine comprising a protective cover partly surrounding permanent magnet pieces.

It is a first objective of the present invention to provide an improved permanent magnet assembly with an improved protection of at least one permanent magnet piece. It is a second objective of the present invention to provide a rotor assembly with the same advantages. A third objective of the present invention is to provide an electrical machine with the same advantages. A fourth objective of the present invention is to provide an advantageous wind turbine.

The first objective is solved by a permanent magnet assembly as claimed in claim 1. The second objective is solved by a rotor assembly as claimed in claim 7. The third objective is solved by an electrical machine as claimed in claim 12. The fourth objective is solved by a wind turbine as claimed in claim 13. The depending claims define further developments of the invention.

The inventive permanent magnet assembly comprises a base plate and at least one permanent magnet piece. The permanent magnet piece is attached to the base plate. The at least one permanent magnet piece is covered by a moulded plastic cover. The at least one permanent magnet piece may comprise NdFeB (Neodymium Iron Boron). Preferably, it consists of NdFeB.

The cover may comprise at least one protrusion. The protrusion can be designed to be slid or inserted into a groove of an electrical machine. The protrusion may be designed to be laid onto a portion of the base plate. The protrusion and the portion of the base plate are designed to be slid or inserted into a groove of an electrical machine.

The cover provides climatic protection against humidity and other aggressive substances. Furthermore, it provides mechanical protection against shock, vibration and impact of foreign objects, for instance in an air gap and during handling. Further climatic protection against humidity and other aggressive substances may be achieved by coating the permanent magnet pieces.

Preferably, the protrusion and the portion of the base plate are designed to be slid into at least one pre-shaped groove of an electrical machine, for example a generator. Advantageously the cover comprises two protrusions, which can be slid into two grooves of an electrical machine, for example a generator.

Advantageously, the cover is designed to be slid or inserted into at the least one groove, for example two grooves, where the cover is fixed by its geometry. The at least one magnet piece or the magnet pieces can be attached to the base plate by means of an adhesive. The assembly of permanent magnet piece and base plate and the cover may be mounted in an element of the electrical machine, for instance a rotor, at the same time by insertion. Generally, the cover may be glued to the magnet piece and/or to the base plate to enhance assembly.

The thickness of the protrusion or the sum of the thickness of the protrusion and the thickness of the portion of the base plate may have a value between 2mm and 3mm. For example, the thickness of the protrusion or the sum of the thickness of the protrusion and the thickness of the portion of the base plate may have a value between 2.5 mm and 2.8 mm, advantageously between 2.6 mm and 2.7 mm. Preferably, the thickness of the protrusion or the sum of the thicknesses is 2.65 mm, so that a proper and lasting connection in, for example, side grooves of a T-shaped slot of an element of an electrical machine, for instance a rotor yoke, can be formed.

In the context of the present invention a T-shaped slot comprises two side grooves. The T-shaped slot with the side grooves may be milled into the rotor.

Because the cover does not offer corrosion protection of the magnet piece, the magnet piece may be coated with a corrosion protecting means. This offers protection against a high corrosion class. For example, each magnet piece can be covered with an epoxy resin.

The cover is attached to the base plate and/or to the magnet piece by means of a snap fit. When snapped onto the magnet, the plastic moulded cover covers the magnet piece or the magnet pieces. Moreover, the cover can be
attached to the assembly of base plate and magnet piece by means of a snap fit.

The cover preferably comprises four side walls and a cover wall. In this case the cover protects five sides of the magnet piece or an assembly of magnet pieces. The sixth side of the magnet piece or an assembly of magnet pieces may be attached to the base plate. Hence, the whole surface of the magnet piece or an assembly of magnet pieces is effectively protected by the moulded plastic cover and the base plate.

For instance, between 2 and 6 permanent magnet pieces, preferably 4 permanent magnet pieces can be attached to the base plate.

The magnet modules may be assembled in the generator by sliding them into a T-shaped slot formed in the rotor yoke. The T-shaped slot may run parallel to the rotation axis of the rotor. For instance, the plastic cover may comprise a protrusion or support structure which fits into the T-shaped slot and holds the snapped in magnet with the base plate in the slot.

To fill one T-shaped slot, 6 base plates with magnets can be inserted. Each base plate may hold four magnets which are glued onto the base plate. There is a small airgap between each neighbouring magnet on the base plate. Each magnet can be covered with an epoxy resin and all four magnets on one base plate can be covered with the moulded plastic cover in addition. The magnet modules are stacked very close to each other in axial direction to offer a very small airgap between 2 neighbouring magnet modules, and maximum utilization of the magnet material for the electrical machine performance.

The inventive permanent magnet assembly may comprise a second base plate. The second base plate may be connected to the first base plate. The previously mentioned base plate, to which the at least on permanent magnet piece is attached, is then identical with the first base plate. The second base plate may be welded, for example spot welded, to the first base plate. The spot welding may be carried out on the base plate between two adjacent magnets.

Preferably, the second base plate comprises the portion which is designed to be slid together with the protrusion into a groove of an electrical machine. For example, a portion of the second base plate together with the protrusion of the cover fit into side grooves of a T-shaped groove or slot.

The sum of the thickness of the protrusion of the moulded cover and the thickness of the second base plate may have a value between 2 mm and 3 mm, for example between 2.5 mm and 2.8 mm, advantageously between 2.6 mm and 2.7 mm. Preferably, the sum of the thicknesses is 2.65 mm so that a proper and lasting connection in, for example, side grooves of a T-shaped slot of a rotor yoke is formed. Advantageously, the magnet piece is located above the slot instead of inside the slot. This can be realised by a sufficient thickness of the base plate.

Preferably, the first base plate and/or the second base plate may have a rectangular shape. Especially the base area and the top surface of the first base plate and/or the second base plate may have a rectangular shape. This has the advantage, that a base plate is composed of two rectangular pieces which are very easy to machine to the desired geometry.

To further protect the magnet pieces against humidity and other aggressive substances, the magnet pieces can be additional surface treated.

Generally, the cover can extend along the whole base plate. For instance, between 2 and 6 permanent magnet pieces, preferably 4 permanent magnet pieces may be attached to the base plate. Preferably, the permanent magnet pieces can be glued onto the base plate. For example, each base plate may hold 4 permanent magnet pieces glued onto it. The cover can extend over the 4 magnets and along the whole base plate.

The present invention offers the possibility of a modular design without the need for a complicated brazing or welding process of the cover and base plate assembly as in existing solutions. In the present arrangement a single base plate is sufficient as the protrusion or support structure of the plastic cover reaches into the side groove of the T-shaped slot.

Having the magnets located above the T-shaped slot and the rotor structure provides an optimized magnetic field for the generator operation. Furthermore this design offers protection of the two end sides of the magnet module, so the magnet pieces can be coated using a lower corrosion resistive coating.

Another advantage of the present solution is that it uses a simple 1-piece base plate with a rectangular geometry, which is very easy to produce. The plastic mould is also easy and inexpensive to produce.

The inventive rotor assembly for an electrical machine comprises a permanent magnet assembly as previously described. The inventive rotor assembly generally has the same advantages as the previously described permanent magnet assembly.

Preferably, the inventive rotor assembly comprises a rotor yoke with at least one groove for holding the permanent magnet assembly onto the rotor. The groove may, for instance, be part of a T-shaped slot. Moreover, the groove may be designed for holding the base plate with the permanent magnet piece or pieces and the moulded plastic cover onto the rotor and in position. For example, the cover may comprise at least one protrusion which is inserted into a corresponding side groove, for example of T-shaped slot, of the rotor yoke. The T-shaped slot with the side grooves may be milled into the rotor.

For example, the magnet modules are assembled in the generator by sliding them into side grooves of a T-shaped slot formed in the rotor yoke. I.e. the plastic cover may comprise a protrusion or support structure which fits into the groove and holds the snapped in magnet with the base plate in the groove as additional support. The magnets exert magnetic force which holds the magnet module onto the rotor. Generally, the fixation of the permanent magnet to the rotor can be provided by the magnetic force, especially the magnetic pull, of the permanent magnet. Moreover, the rotor may be an outer rotor. The permanent magnet assemblies mounted in the rotor may face towards the rotation axis of the rotor.

The rotor may comprise a rotation axis. Preferably, the permanent magnet assembly is slid into the grooves, for example of T-shaped slot, in a direction parallel to the rotation axis of the rotor. In this case the grooves may have a length which extends in a direction parallel to the rotation axis of the rotor.

Preferably, the cover comprises two protrusions. The cover may be fixed to the rotor or rotor yoke by its geometry, for example by the geometry of the protrusions. The second base plate may comprise two sides which are inserted alone or together with the protrusion of the cover into corresponding grooves of the rotor yoke.

Advantageously the at least one groove has a width between 2 mm and 3 mm, for example between 2.5 mm and 2.8 mm, advantageously between 2.6 mm and 2.7 mm, preferably 2.65 mm. Furthermore, the width of the groove may be equal to the thickness of the protrusion of the cover or the sum of the thickness of the protrusion of the cover and the thickness of the portion of the base plate which is inserted into the groove.

The width of the groove may be equal to the thickness of the protrusion of the cover, or the width of the groove may be equal to the thickness of the portion of the base plate which is inserted into the groove, or the width of the groove may be equal to the sum of the thickness of the protrusion of the cover and the thickness of the portion of the base plate which is inserted into the groove.

For example, the thickness of the protrusion of the cover or the thickness of the portion of the base plate which is inserted into the groove or the sum of the thicknesses of the protrusion and the portion of the base plate which is inserted into the groove and the width of the groove may have a value of 2.65 mm.

The side groove of the T-slot or groove may have a height or width of 2.65 mm which is a standard size a tool can groove into the rotor yoke. The support structure of the plastic cover can be built with a width to provide a tight fit in the T-shaped slot. The tight fit can be achieved either by the support structure filling the complete side groove or by an upper part of the support structure pressing the base plate onto the rotor structure.

Preferably, the permanent magnet piece is located completely outside of the T-shaped slot. For example, the base plate or the base plates are thicker than the depth of the T-shaped slot.

The inventive electrical machine comprises a permanent magnet assembly as previously described or a rotor assembly as previously described. The inventive electrical machine has the same advantages as the previously described permanent magnet assembly or the previously described rotor assembly. For example, the inventive electrical machine may be a generator. A number of magnet modules or permanent magnet assemblies may be assembled in the generator by sliding them into side grooves of T-shaped slots formed in the rotor yoke. The magnet modules may be stacked very close to each other in the axial direction to offer a very small air gap between two neighbouring magnet modules. This further offers a maximum utilization of the magnet material for the electrical machine performance.

Generally, the generator may comprise a rotor, a stator and a rotation axis. The rotor may be located radially outside of the stator. This means, that the outer rotor may rotate around the inner stator. The permanent magnet pieces may be located on an inner surface of the rotor. The permanent magnet pieces may face towards the rotation axis.

The inventive wind turbine comprises a previously described electrical machine, for example a generator, and has the same advantages as the previously described electrical machine.

The present invention generally offers the possibility of a modular design without the need for a complicated brazing or welding process of the cover and base plate assembly as in existing solutions. Moreover, it provides an effective protection of the permanent magnet piece against humidity and other aggressive substances and against shock, vibration and impact of foreign objects, for instance in an air gap and during handling. Moreover, the plastic cover is easy and inexpensive to produce.

It has to be noted that embodiments of the invention have been described with reference to different subject matters.

In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Further features, properties and advantages of the present invention will become clear from the following description of an embodiment in conjunction with the accompanying drawings. All features are advantageous separate or in combination with each other.
- Figure 1: schematically shows a wind turbine.
- Figure 2: schematically shows a permanent magnet assembly in a sectional view.
- Figure 3: schematically shows the moulded plastic cover in a perspective view.
- Figure 4: schematically shows a variant of an inventive permanent magnet assembly in a sectional view.
- Figure 5: schematically shows part of the inventive permanent magnet assembly as shown in figure 4 in a sectional view.
- Figure 6: schematically shows a further variant of an inventive permanent magnet assembly in a sectional view.
- Figure 7: schematically shows an inventive permanent magnet assembly in a sectional view.
- Figure 8: schematically shows part of a rotor yoke or rotor housing with a magnet assembly in a sectional view.
- Figure 9: schematically shows part of a rotor yoke or rotor housing with a magnet assembly in a sectional view.

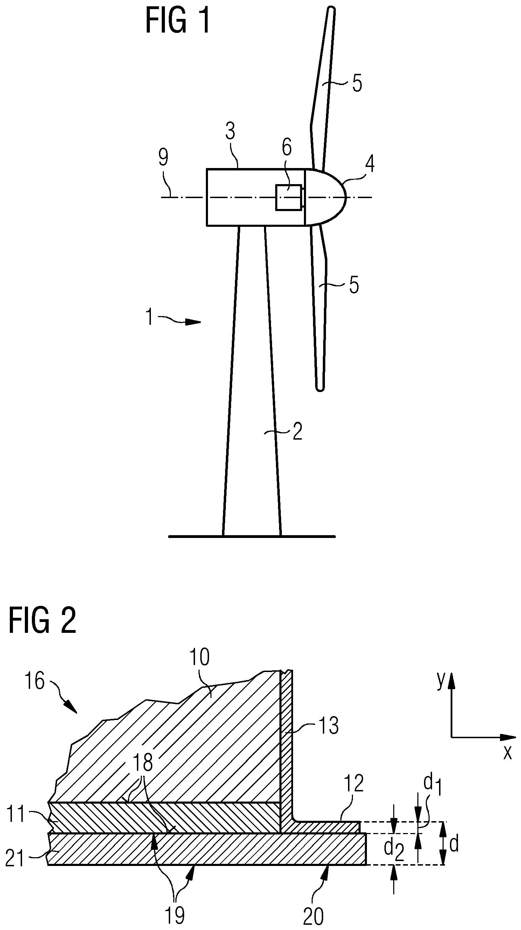

An embodiment of a present invention will now be described with reference to Figures 1 to 9.

Figure 1 schematically shows a wind turbine 1. The wind turbine 1 comprises a tower 2, a nacelle 3 and a hub 4. The nacelle 3 is located on top of the tower 2. A number of wind turbine blades 5 are attached to the hub 4. The hub 4 is mounted to the nacelle 3. Moreover, the hub 4 is pivot-mounted such that it is able to rotate about a rotation axis 9. An electrical machine, for example a generator 6, is located inside the nacelle 3. The wind turbine 1 is a direct drive wind turbine.

Figure 2 schematically shows a permanent magnet assembly in a sectional side view. The permanent magnet assembly 16 which is shown in Figure 2 comprises a permanent magnet piece 10, for example a NdFeB magnet piece, a first base plate 11, a second base plate 21, and a moulded plastic cover 13. The cover 13 comprises two protrusions 12; one protrusion 12 is shown in Figure 2.

The magnet piece 10 is laid onto the first base plate 11. For example, the magnet piece 10 may be attached to the first base plate 11 by means of an adhesive. The magnet piece 10 and the first base plate 11 are covered by the moulded plastic cover 13. The second base plate 21 is connected to the first base plate 11, for instance by means of spot welding. Preferably, the spot welding is carried out on the base plate 11 and 21 between two adjacent magnets 10.

The first base plate 11 and the second base plate 21 have a rectangular shape. This means that the base area 19 and the top surface 18 of the base plates 11 and 21 have a rectangular shape. The second base plate 21 has a larger surface area than the first base plate 11. The second base plate 21 protrudes the first base plate 11, at least in x-direction as shown in Figure 2.

The protrusion 12 lies onto a portion 20 of the second base plate 21, which protrudes the first base plate 11 in x-direction. The thickness d of the protrusion 12 and the portion 20, which is the sum of the thickness d₁ of the protrusion 12 and the thickness d₂ of the second base plate 21, in y-direction is approximately 2.65 mm so that it forms a proper and lasting connection in side grooves of T-shaped slots.

The cover 13 does not offer corrosion protection of the magnet piece 10. Therefore, the magnet piece 10 can be coated by means of a corrosion protecting means to offer protection against a high corrosion class.

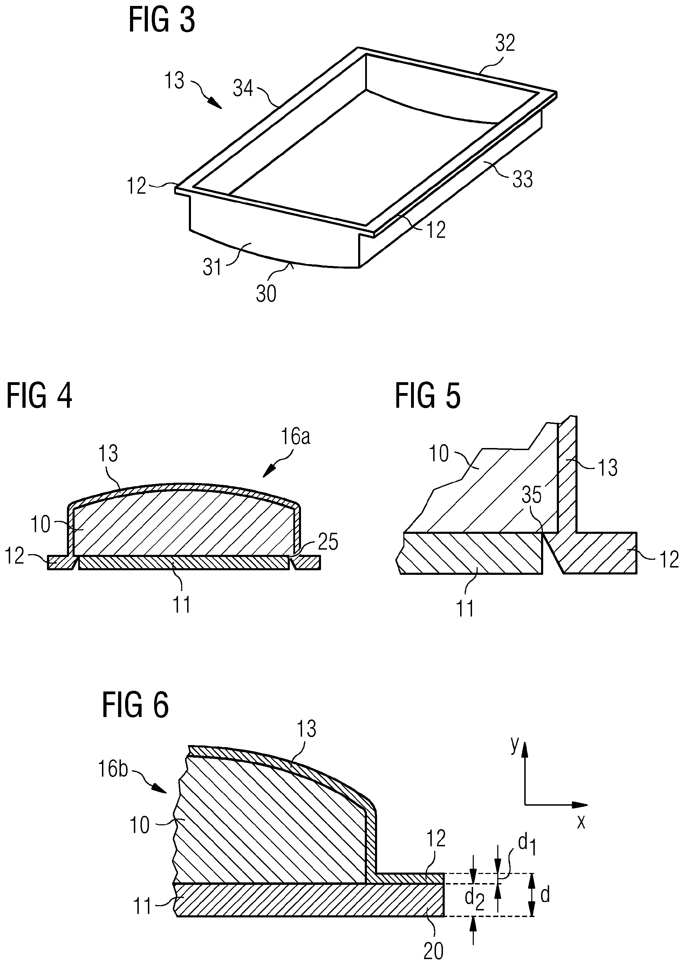

Figure 3 schematically shows the moulded plastic cover 13 in a perspective view onto the bottom side of the cover. The moulded plastic cover 13 comprises a top surface wall 30 and four side walls, namely a front side wall 31, a back side wall 32, a right side wall 33 and a left side wall 34. The protrusions 12 are located at the right side wall 33 and at the left side wall 34. The cover 13 provides a protection of the magnet piece at five sides.

Figure 4 schematically shows a variant of an inventive permanent magnet assembly 16a in a sectional view. Figure 5 schematically shows part of the inventive permanent magnet assembly as shown in figure 4 in a sectional view. The moulded plastic cover 13 is covered over the magnet piece 10 and the base plate 11. The cover 13 is attached to the assembly of base plate 11 and magnet piece 10 by means of a snap fit 25. In figure 4 and 5 the magnet piece 10 protrudes the base plate 11. A snap fit nose 35 of the cover 13, which may be located opposite to the protrusion 12, holds the magnet piece 10 inside the cover 13. The base plate 11 may be attached to the magnet piece 10 by means of an adhesive.

Figure 6 schematically shows a further variant of an inventive permanent magnet assembly 16b in a sectional view. The permanent magnet assembly 16b differs from the permanent magnet assembly 16, as shown in figure 2, in that the permanent magnet assembly 16b in figure 6 comprises only one base plate 11. The base plate 11 comprises a portion 20 which protrudes the magnet piece 10 and onto which the protrusion 12 of the cover 13 is laid.

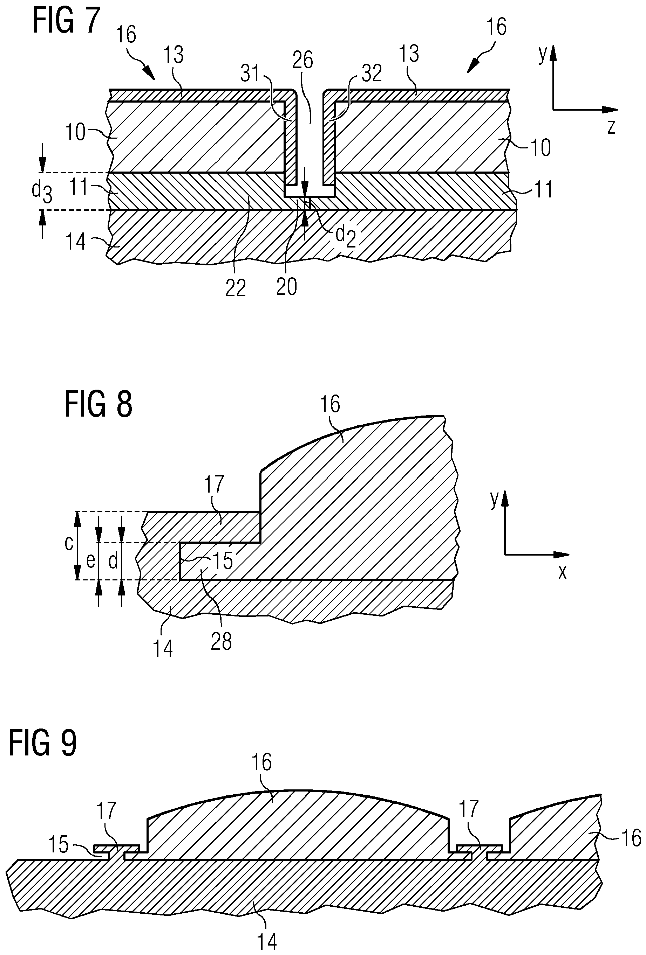

Figure 7 schematically shows two inventive permanent magnet assemblies 16 in a sectional view through the two magnet assemblies 16 along the T-shaped slot in an axial side view. The magnet assemblies 16 are positioned in a T-shaped slot. The front side wall 31 of the first magnet assembly 16 faces the back side wall 32 of the second magnet assembly 16. An air gap 26 is located between the front side wall 31 of the first magnet assembly 16 and the back side wall 32 of the second magnet assembly 16.

The thickness d₃ of the base plate 11 at the portion 22, where the permanent magnet 10 is attached to it, is different from the thickness d₂ of the base plate 11 at the portion 20, which is located between the two magnet assemblies 16. In Figure 7 the thickness d₂ is less than the thickness d₃.

Figure 8 schematically shows part of a rotor yoke or rotor housing 14 with a magnet assembly 16 in a sectional view. The rotor assembly comprises a rotor yoke or rotor housing 14. The rotor yoke 14 comprises a number of protrusions 17. By means of the protrusions 17 so called T-shaped slots are formed. Each T-shaped slot comprises two side grooves 15 for mounting the magnet assembly 16. The T-shaped slots have a depth c. A protrusion 28 of the magnet assembly 16 is inserted into the side groove 15. The protrusion 28 may comprise a portion 20 of the second base plate 21 and/or a portion 20 of the second base plate 11 and/or a protrusion 12 of the cover 13. The width e of the side groove 15 is equal to the thickness d of the protrusion 28. Thus, the magnet 10 is located above the side groove 15 instead of inside the groove 15.

For example, the thickness d of the protrusion 12 of the cover 13 and the portion 20 of a base plate 11 or 21, which is the sum of the thickness d₁ of the protrusion 12 and the thickness d₂ of the portion 20 of a base plate 11 or 21, in y-direction is approximately 2.65 mm so that it forms a proper and lasting connection in the side grooves of T-shaped grooves or slots 15.

Preferably, the sum of the thicknesses of the base plates 11 and 21 has a value which is higher than the depth c of the T-shaped slot. This provides that the permanent magnet 10 is located completely outside of the T-shaped slot.

Generally each protrusion 12 of the cover 13 may be slid into a pre-shaped groove 15 in, for example, a generators rotor, where the cover 13 is fixed by its geometry or the geometry of the protrusion 12. The magnet-base plate assembly, comprising the permanent magnet piece 10 and the base plate 11, and the cover 13 are mounted in the rotor 14 or rotor yoke at the same time by inserting the protrusion 12 and/or the portion 20 of the base plate 11 into pre-shaped grooves 15.

Generally all previously described permanent magnet assemblies 16, 16a and 16b can be replaced by each other and have the same functionality and advantages. Moreover, the magnet pieces may comprise or consist of NdFeB.

Figure 9 schematically shows two neighbouring magnet assemblies 16 which are connected to a rotor yoke 14 by inserting them into side grooves 15 of T-shaped slots formed by protrusions 17 of the rotor yoke 14. The rotor assembly may be part of a generator 6, for example of a wind turbine generator.

The present invention provides a climatic protection against humidity and other aggressive substances as well as a mechanical protection of the permanent magnet pieces against shock, vibration and impact of foreign objects by means of the used moulded plastic cover.

## Claims

1. A permanent magnet assembly (16) comprising a base plate (11, 21) and at least one permanent magnet piece (10) which is attached to the base plate (11, 21), wherein the at least one permanent magnet piece (10) is covered by a moulded plastic cover (13),
**characterised in that**
the cover (13) is attached to the base plate (11, 21) and/or to the magnet piece (10) by means of a snap fit (25).

2. The permanent magnet assembly (16) as claimed in claim 1,
**characterised in that**
the cover (13) comprises at least one protrusion (12), the protrusion (12) being designed to be slid into a groove (15) of an electrical machine (6).

3. The permanent magnet assembly (16) as claimed in claim 1 or claim 2,
**characterised in that**
the cover (13) comprises at least one protrusion (12), the protrusion (12) being designed to be laid onto a portion (20) of the base plate (11, 21), the protrusion (12) and the portion (20) of the base plate (11, 21) being designed to be slid into a groove (15) of an electrical machine (6).

4. The permanent magnet assembly (16) as claimed in claim 3,
**characterised in that**
the thickness of the protrusion (12) or the sum of the thickness of the protrusion (12) and the thickness of the portion (20) of the base plate (11, 21) has a value between 2mm and 3mm.

5. The permanent magnet assembly (16) as claimed in any of the claims 1 to 4,
**characterised in that**
the permanent magnet assembly (16) comprises a second base plate (21) which is connected to the first base plate (11).

6. The permanent magnet assembly (16) as claimed in claim 5,
**characterised in that**
the second base plate (21) comprises a portion (20) which is designed to be slid together with the protrusion (12) into a groove (15) of an electrical machine (6).

7. A rotor assembly for an electrical machine (6) comprising a permanent magnet assembly (16) as claimed in any of the claims 1 to 6.

8. The rotor assembly as claimed in claim 7,
**characterised in that**
the rotor assembly comprises a rotor yoke (14) with at least one groove (15) for holding the permanent magnet assembly (16) onto the rotor.

9. The rotor assembly as claimed in claim 7 or claim 8,
**characterised in that**
the second base plate (21) comprises two sides which are inserted alone or together with the protrusion (12) of the cover (13) into corresponding grooves (15) of the rotor yoke (14) .

10. The rotor assembly as claimed in claim 8 or claim 9,
**characterised in that**
the at least one groove (15) has a width between 2mm and 3mm.

11. The rotor assembly as claimed in any of the claims 8 to 10,
**characterised in that**
the width (e) of the groove (15) is equal to the thickness (d1) of the protrusion (12) of the cover (13) or the thickness (d2) of the portion (20) of the base plate (11, 21) which is inserted into the groove (15)or the width (e) of the groove (15) is equal to the sum of the thickness (d1) of the protrusion (12) of the cover (13) and the thickness (d2) of the portion (20) of the base plate (11, 21) which is inserted into the groove (15).

12. An electrical machine (6) comprising a permanent magnet assembly (16) as claimed in any of the claims 1 to 6 or a rotor assembly as claimed in any of the claims 7 to 11.

13. A wind turbine (1) comprising an electrical machine (6) as claimed in claim 12.

## Patentansprüche

1. Permanentmagnetbaugruppe (16), die eine Grundplatte (11, 21) und mindestens ein Permanentmagnetstück (10) umfasst, das an der Grundplatte (11, 21) angebracht ist, wobei das mindestens eine Permanentmagnetstück (10) mit einer geformten Kunststoffabdeckung (13) abgedeckt ist,
**dadurch gekennzeichnet, dass**
die Abdeckung (13) über eine Schnappverbindung (25) an der Grundplatte (11, 21) und/oder dem Magnetstück (10) angebracht ist.

2. Permanentmagnetbaugruppe (16) nach Anspruch 1,
**dadurch gekennzeichnet, dass**
die Abdeckung (13) mindestens einen Vorsprung (12) umfasst, der so gestaltet ist, dass er sich in eine Nut (15) einer elektrischen Maschine (6) hineinschieben lässt.

3. Permanentmagnetbaugruppe (16) nach Anspruch 1 oder 2,
**dadurch gekennzeichnet, dass**
die Abdeckung (13) mindestens einen Vorsprung (12) umfasst, der so gestaltet ist, dass er sich auf einen Abschnitt (20) der Grundplatte (11, 21) legen lässt, wobei der Vorsprung (12) und der Abschnitt (20) der Grundplatte (11, 21) so gestaltet sind, dass sie sich in eine Nut (15) einer elektrischen Maschine (6) hineinschieben lassen.

4. Permanentmagnetbaugruppe (16) nach Anspruch 3,
**dadurch gekennzeichnet, dass**
die Dicke des Vorsprungs (12) oder die Summe der Dicke des Vorsprungs (12) und der Dicke des Abschnitts (20) der Grundplatte (11, 21) einen Wert zwischen 2 mm und 3 mm besitzt.

5. Permanentmagnetbaugruppe (16) nach einem der Ansprüche 1 bis 4,
**dadurch gekennzeichnet, dass**
die Permanentmagnetbaugruppe (16) eine zweite Grundplatte (21) umfasst, die mit der ersten Grundplatte (11) verbunden ist.

6. Permanentmagnetbaugruppe (16) nach Anspruch 5,
**dadurch gekennzeichnet, dass**
die zweite Grundplatte (21) einen Abschnitt (20) umfasst, der so gestaltet ist, dass er sich zusammen mit dem Vorsprung (12) in eine Nut (15) einer elektrischen Maschine (6) hineinschieben lässt.

7. Rotorbaugruppe für eine elektrische Maschine (6) mit einer Permanentmagnetbaugruppe (16) nach einem der Ansprüche 1 bis 6.

8. Rotorbaugruppe nach Anspruch 7,
**dadurch gekennzeichnet, dass**
die Rotorbaugruppe ein Rotorjoch (14) mit mindestens einer Nut (15) zum Halten der Permanentmagnetbaugruppe (16) am Rotor umfasst.

9. Rotorbaugruppe nach Anspruch 7 oder 8,
**dadurch gekennzeichnet, dass**
die zweite Grundplatte (21) zwei Seiten umfasst, die allein oder zusammen mit dem Vorsprung (12) der Abdeckung (13) in entsprechende Nuten (15) des Rotorjochs (14) eingeführt werden.

10. Rotorbaugruppe nach Anspruch 8 oder 9,
**dadurch gekennzeichnet, dass**
die mindestens eine Nut (15) eine Breite zwischen 2 mm und 3 mm aufweist.

11. Rotorbaugruppe nach einem der Ansprüche 8 bis 10,
**dadurch gekennzeichnet, dass**
die Breite (e) der Nut (15) der Dicke (d1) des Vorsprungs (12) der Abdeckung (13) oder der Dicke (d2) des Abschnitts (20) der Grundplatte (11, 21) entspricht, der in die Nut (15) eingeführt ist, oder die Breite (e) der Nut (15) der Summe der Dicke (d1) des Vorsprungs (12) der Abdeckung (13) und der Dicke (d2) des Abschnitts (20) der Grundplatte (11, 21) entspricht, der in die Nut (15) eingeführt ist.

12. Elektrische Maschine (6) mit einer Permanentmagnetbaugruppe (16) nach einem der Ansprüche 1 bis 6 oder Rotorbaugruppe nach einem der Ansprüche 7 bis 11.

13. Windenergieanlage (1) mit einer elektrischen Maschine (6) nach Anspruch 12.

## Revendications

1. Ensemble formant aimant permanent (16) comprenant une plaque de base (11, 21) et au moins une pièce d'aimant permanent (10) qui est attachée à la plaque de base (11, 21), dans lequel au moins une pièce d'aimant permanent (10) est recouverte par un couvercle moulé en plastique (13),
**caractérisé en ce que**
le couvercle (13) est attaché à la plaque de base (11, 21) et/ou à la pièce magnétique (10) au moyen d'un emboîtage élastique (25).

2. Ensemble formant aimant permanent (16) selon la revendication 1,
**caractérisé en ce que**
le couvercle (13) comprend au moins une protrusion (12), la protrusion (12) étant conçue pour être glissée dans une rainure (15) d'une machine électrique (6).

3. Ensemble formant aimant permanent (16) selon la revendication 1 ou la revendication 2,
**caractérisé en ce que**
le couvercle (13) comprend au moins une protrusion (12), la protrusion (12) étant conçue pour être étendue sur une portion (20) de la plaque de base (11, 21), la protrusion (12) et la portion (20) de la plaque de base (11, 21) étant conçues pour être glissées dans une rainure (15) d'une machine électrique (6) .

4. Ensemble formant aimant permanent (16) selon la revendication 3,
**caractérisé en ce que**
l'épaisseur de la protrusion (12) ou la somme de l'épaisseur de la protrusion (12) et de l'épaisseur de la portion (20) de la plaque de base (11, 21) possède une valeur comprise entre 2mm et 3mm.

5. Ensemble formant aimant permanent (16) selon l'une quelconque des revendications 1 à 4,
**caractérisé en ce que**
l'ensemble formant aimant permanent (16) comprend une seconde plaque de base (21) qui est connectée à la première plaque de base (11).

6. Ensemble formant aimant permanent (16) selon la revendication 5,
**caractérisé en ce que**
la seconde plaque de base (21) comprend une portion (20) qui est conçue pour être glissée ensemble avec la protrusion (12) dans une rainure (15) d'une machine électrique (6).

7. Ensemble formant rotor pour une machine électrique (6) comprenant un assemblage formant aimant permanent (16) selon l'une quelconque des revendications 1 à 6.

8. Ensemble formant rotor selon la revendication 7,
**caractérisé en ce que**
l'ensemble formant rotor comprend un étrier de rotor (14) avec au moins une rainure (15) pour maintenir l'assemblage formant aimant permanent (16) sur le rotor.

9. Ensemble formant rotor selon la revendication 7 ou 8,
**caractérisé en ce que**
la seconde plaque de base (21) comprend deux faces qui sont insérées seules ou ensemble avec la protrusion (12) du couvercle (13) dans les rainures (15) correspondantes de l'étrier de rotor (14).

10. Ensemble formant rotor selon la revendication 8 ou 9,
**caractérisé en ce que**
l'une au moins des rainures (15) possède une largeur entre 2mm et 3mm.

11. Ensemble formant rotor selon l'une quelconque des revendications 8 à 10,
**caractérisé en ce que**
la largeur (e) de la rainure (15) est égale à l'épaisseur (d1) de la protrusion (12) du couvercle (13) ou l'épaisseur (d2) de la portion (20) de la plaque de base (11, 21) qui est insérée dans la rainure (15) ou la largeur (e) de la rainure (15) est égale à la somme de l'épaisseur (d1) de la protrusion (12) du couvercle (13) et de l'épaisseur (d2) de la portion (20) de la plaque de base (11, 21) qui est insérée dans la rainure (15).

12. Machine électrique (6) comprenant un assemblage formant aimant permanent (16) selon l'une quelconque des revendications 1 à 6 ou assemblage formant rotor selon l'une quelconque des revendications 7 à 11.

13. Eolienne (1) comprenant une machine électrique (6) selon la revendication 12.
